# EUROPÄISCHE PATENTSCHRIFT

(11) **EP 3 474 563 B1**
(45) Veröffentlichungstag und Bekanntmachung des Hinweises auf die Patenterteilung: **07.10.2020**
(21) Anmeldenummer: 18000705.6
(22) Anmeldetag: 30.08.2018
(51) Int. Cl.: H04Q 9/00

(54) **VERFAHREN ZUM ÜBERTRAGEN VON DATEN**
DATA TRANSFER METHOD
PROCÉDÉ DE TRANSMISSION DE DONNÉES

(30) Priorität: 28.09.2017 DE 102017009100; 15.06.2018 DE 102018004828
(43) Veröffentlichungstag der Anmeldung: 24.04.2019
(73) Patentinhaber: Diehl Metering Systems GmbH, 90451 Nürnberg (DE)
(72) Erfinder: Petkov, Hristo, DE - 90425 Nürnberg (DE); Lautenbacher, Thomas, DE - 91058 Erlangen (DE); Kauppert, Thomas, DE - 90455 Nürnberg (DE); Mzyk, Raphael, DE - 91126 Kammerstein (DE)
(74) Vertreter: Diehl Patentabteilung

(56) Entgegenhaltungen:
- US-A1- 2010 176 967
- US-A1- 2012 059 610
- US-A1- 2013 308 685
- US-A1- 2014 028 465

## Beschreibung

Die vorliegende Erfindung betrifft ein Verfahren zum Übertragen von Daten zwischen einem Endgerät und einem Datensammler per Funk gemäß dem Oberbegriff des Anspruchs 1.

### Technologischer Hintergrund

Gattungsgemäße Endgeräte sind z. B. intelligente Verbrauchsmessgeräte, auch Smart Meter genannt. Diese sind üblicherweise jeweils Wohn-, Industrie- oder Gewerbeeinheiten zugeordnete und in ein Versorgungsnetz eingebundene Verbrauchsmessgeräte, z. B. für Wärme, Strom, Gas, Wasser. Die intelligenten Verbrauchsmessgeräte zeigen dabei dem jeweiligen Anschlussbenutzer den tatsächlichen Verbrauch an und übermitteln diesen an eine übergeordnete Zentraleinheit, z. B. die Steuerzentrale des Versorgers. Daher haben die intelligenten Verbrauchsmessgeräte den Vorteil, dass manuelle Ablesungen der Zählerstände entfallen und seitens des Versorgers kurzfristigere Rechnungsstellungen gemäß dem tatsächlichen Verbrauch vorgenommen werden können. Durch kurzfristigere Ableseintervalle ist wiederum eine genauere Kopplung der Endkundentarife an die Entwicklung der Börsenstrompreise möglich. Auch können die Versorgungsnetze wesentlich besser ausgelastet werden.

Die anfallenden Messdaten der Verbrauchsmessgeräte werden in der Regel in Form von Datenpaketen oder Telegrammen per Funk, beispielsweise im ISM (Industrial, Scientific, Medical)-Band- oder SRD (Short Range Devices oder Kurzstreckenfunk)-Band-Frequenzbereich an übergeordnete Datensammler bzw. Konzentratoren übertragen, welche die Daten speichern und an die Zentraleinheit weiter übertragen. Bei diesen Frequenzbereichen besteht das Problem, dass aufgrund der Häufigkeit der Verwendung derartiger Frequenzbereiche für unterschiedlichste technische Einrichtungen, wie etwa Garagentorsteuerungen, Babyphones, Alarmanlagen, WLAN, Bluetooth, Rauchwarnmelder oder dergleichen, es häufig zu Störungen kommen kann, wodurch die Wahrscheinlichkeit einer erfolgreichen Übertragung verringert wird.

Ferner ist die Energieeffizienz bei den gattungsgemäßen Verbrauchsmessgeräten von großer Bedeutung, da heutige Verbrauchsmessgeräte in der Regel batteriebetrieben sind und möglichst lange Wartungsintervalle aufweisen sollten. Häufige Datensendungen sowie vermehrte Empfangsbereitschaftszeiten, sogenannte Empfangsfenster, verkürzen die Batteriedauer immens, verbessern jedoch die Übertragungsqualität bzw. Übertragungssicherheit, d. h. die Wahrscheinlichkeit einer erfolgreichen Übertragung der Daten. Hierbei wird in der Regel ein Kompromiss gewählt, bei dem eine gerade noch ausreichende Sende- und Empfangsbereitschaftszeit mit ausreichender Übertragungssicherheit gewählt wird, die in energetischer Hinsicht noch akzeptabel erscheint. Dementsprechend besteht ein großes Interesse daran, den Energiebedarf der Verbrauchsmessgeräte zu verringern und die Übertragungssicherheit zu verbessern.

### Druckschriftlicher Stand der Technik

Ein Verfahren gemäß dem Oberbegriff des Anspruchs 1 ist aus der US 2014/0028465 bekannt. Bei diesem Verfahren werden vom Verbrauchsmessgerät nach dem Aufbau einer Kommunikation Daten in Form von IDM-Sendungen (Interval Data Messages), Datenpaketen mit variabler Länge oder mehreren getrennte Datenpakete umfassende Datentelegrammen versendet. Der Datensammler verarbeitet die empfangenen Daten und entscheidet, ob eine weitere bidirektionale Kommunikation notwendig ist oder nicht.

Die US 2013/0308685 beschreibt ein WLAN und BT umfassendes Drahtloskommunikationssystem, bei dem BT Nachrichten in Abhängigkeit der Qualität der WLAN-Frequenzkanäle mittels einer Frequenzsprungfunktion über eine Mehrzahl von verschiedenen Frequenzkanäle gesendet werden können.

Aus der US 2010/76967 A1 ist ein drahtloses Kommunikationsverfahren zwischen Endgeräten sowie einem mobilen Datensammler bekannt, bei dem der Datensammler zunächst periodisch T25 ID Piloten an das Endgerät sendet und Letzteres eine RSSI-Prüfung vornimmt. Bei positivem Ergebnis nimmt das Endgerät einen Demand Reset vor und sendet ein Data Request Paket an den Datensammler.

US 2012/0059610 A1 beschreibt ein Energieerfassungs-System, welches einen Datensammler sowie einzelne Energiezähler umfasst, die in der Lage sind, bidirektional zu kommunizieren. Die Messergebnisse der Energiezähler sammelt der Datensammler ein.

Aus der DE 10 2007 062 077 A1 ist ein Verfahren zur Übertragung der Messdaten von Verbrauchsmessgeräten an einen Datensammler per Funk bekannt, bei dem sich der Datensammler zeitweise oder dauerhaft auf Empfang befindet und das Verbrauchsmessgerät die überwiegende Zeit in einer Ruhephase ist, d. h. sich nicht in Sendebereitschaft befindet. Das Verbrauchsmessgerät geht periodisch in Sendebereitschaft über und versucht, eine bidirektionale Funkverbindung mit dem Datensammler aufzubauen, wobei das Verbrauchsmessgerät auf einem ersten Kanal ein kurzes Funksignal aussendet und danach auf einem zweiten Kanal auf Empfang schaltet, d. h. ein Empfangsfenster öffnet, um eine mögliche Antwort des Datensammlers zu empfangen. Für den Fall, dass der Datensammler antwortet, z. B. mit einem Bestätigungssignal, findet die Übertragung der Daten an den Datensammler vollständig oder teilweise auf dem zweiten Kanal statt. Im Anschluss daran oder bei nicht erfolgter Übertragung kehrt das Verbrauchsmessgerät wieder in die Ruhephase zurück. Dadurch soll eine erfolgreiche Übertragung vom Verbrauchsmessgerät zum Datensammler gewährleistet werden. Dabei können sich Funksignale mehrerer Verbrauchsmessgeräte überlagern, sofern diese gleichzeitig an den Datensammler gesendet werden. Zudem können sich die Übertragungsbedingungen am Standort eines Kommunikationsteilnehmers abrupt ändern, z. B. durch einen auftretenden Störer (z. B. eine andere auf dem jeweiligen Frequenzkanal sendende Einrichtung), sodass auch nach einem erfolgreichen Kommunikationsaufbau keine erfolgreiche Datenübertragung stattfinden kann, wodurch die Übertragungsqualität sowie die Übertragungssicherheit verringert werden. Vielmehr muss die gesamte Datenübertragung erneut durchgeführt werden, was sich auf den Energiebedarf in erheblichem Maße negativ auswirkt.

### Aufgabe der vorliegenden Erfindung

Die Aufgabe der vorliegenden Erfindung besteht daher darin, ein Verfahren zum Übertragen von Daten zur Verfügung zu stellen, bei dem der Energiebedarf zur Datenübertragung verringert und die Übertragungssicherheit sowie Übertragungsqualität der Daten verbessert wird.

### Lösung der Aufgabe

Die vorstehende Aufgabe wird durch die gesamte Lehre des Anspruchs gelöst. Zweckmäßige Ausgestaltungen der Erfindung sind in den Unteransprüchen beansprucht.

Bei dem gattungsgemäßen Verfahren zum Übertragen von Daten zwischen einem Endgerät, welches erfindungsgemäß ein Verbrauchsmessgerät oder ein Sensor ist, und einem Datensammler per Funk, befindet sich der Datensammler in der Regel zeitweise oder dauerhaft auf Empfang, wobei das Endgerät aus einer Ruhephase (z. B. Standby-Modus) heraus versucht, eine Kommunikation mit dem Datensammler herzustellen, um die Daten vollständig oder teilweise an den Datensammler zu senden und/oder Daten vom Datensammler zu empfangen. Beispielsweise kann es sich bei der Ruhephase um einen Zeitraum handeln, in dem das Endgerät zwar die aktuellen Messdaten, z. B. den aktuellen Verbrauch, aufzeichnet, jedoch die Sende- und/oder Empfangsbereitschaft abgeschaltet oder zumindest einschränkt ist, um den Energieverbrauch zu verringern. Alternativ kann auch der Datensammler versuchen, eine Kommunikation mit dem Endgerät über mindestens einen Frequenzkanal herzustellen, um die Daten vollständig oder teilweise an das Endgerät senden und/oder vom Endgerät zu empfangen. Das Endgerät geht hierbei in zeitlichen Abständen aus der Ruhephase heraus für eine vorgegebene Zeitdauer auf Empfang.

Erfindungsgemäß sendet das Endgerät nach dem Aufbau der Kommunikation und somit während der Kommunikation, d. h. der Übertragung der Daten, mindestens eine Nachricht an den Datensammler. Beispielsweise kann diese Nachricht auch wiederholt gesendet werden. Der Datensammler kann dabei die Übertragung der Daten nach dem Empfang der Nachricht aufgrund des Inhalts der Nachricht fortsetzen, unterbrechen und/oder beenden. Daraus resultiert der Vorteil, dass der Tastgrad verringert werden kann. Dadurch, dass das Endgerät das Übertragen der Daten über die Nachricht vom Datensammler anfordert, kann das Endgerät vermehrt in der energieschonenden Ruhephase verbleiben. Daraus resultiert der Vorteil, dass die übertragungsaktiven Zeiten des Endgerätes an die jeweilige Übertragungssituation angepasst werden können. Beispielsweise kann die Datenübertragung des Datensammlers durch das Endgerät unter- oder abgebrochen werden, wenn der Frequenzkanal gestört oder belegt ist, d. h. wahrscheinlich keine erfolgreiche Datenübertragung möglich ist. Der Energieverbrauch kann dadurch in besonderem Maße verbessert werden, da unnötige Empfangsbereitschaftszeiten verringert oder gar verhindert werden, wodurch sich die Haltbarkeit der Energieversorgung wesentlich verlängern lässt. Zudem kann die verfügbare Sendezeit (Tastgrad) des Datensammlers derart angepasst werden, dass dieser vorzugsweise nur sendet, wenn die Wahrscheinlichkeit einer erfolgreichen Übertragung der Daten ausreichend groß ist. Ferner kann die Übertragungssicherheit sowie die Übertragungsqualität der Daten durch die Anwendung des Verfahrens in besonderem Maße gesteigert werden, indem Daten nur übertragen werden, wenn z. B. im Bereich beider Kommunikationsteilnehmer gute Übertagungsbedingungen für die vorzugsweise gesamte Zeitdauer der Datenübertragung herrschen.

Zweckmäßigerweise kann das Endgerät in zeitlichen Abständen aus der Ruhephase heraus einen Funkruf aussenden und danach für eine vorgegebene Zeitdauer zum Aufbau der insbesondere bidirektionalen Kommunikation mit dem Datensammler auf Empfang gehen. Bei dem Funkruf kann es sich z. B. um einen Beacon, eine Nachricht, ein Datenpaket, ein Teildatenblock, ein Synchronisationssignal oder dergleichen handeln. Alternativ oder zusätzlich kann auch der Datensammler einen Funkruf zum Aufbau der Kommunikation mit dem Endgerät aussenden, wobei das Endgerät in zeitlichen Abständen aus der Ruhephase heraus auf Empfang geht, um den Funkruf zu empfangen. Dementsprechend kann entweder der Datensammler ("Pull"-Modus) oder das Endgerät ("Push"-Modus) den Aufbau der Kommunikation einleiten.

Erfindungsgemäß erfolgt die Übertragung der Daten über mindestens einen Frequenzkanal und in Form von Datenpaketen, die jeweils mehrere Datenblöcke umfassen, welche wiederum in Teildatenblöcke (sogenannte "Hops") aufgeteilt sein können. Beispielsweise bilden mehrere Teildatenblöcke einen 4, 16 oder 32 Byte großen Datenblock.

Ferner kann der Datensammler, für den Fall, dass der Datensammler den Funkruf des Endgerätes empfangen hat, entweder die Daten an das Endgerät senden, sodass dieses die Daten empfangen kann, oder ein Bestätigungssignal an das Endgerät senden, wobei das Endgerät nach dem Empfang der Bestätigung die Daten vollständig oder teilweise an den Datensammler senden kann, sodass dieser die Daten empfängt, d. h. es erfolgt eine bidirektionale Kommunikation, bei der die beteiligten Kommunikationsteilnehmer die bevorstehende Datenübertragung gegenseitig entweder durch die Datensendung des Datensammlers oder ein Bestätigungssignal bestätigen müssen ("Handshake"). Die Übertragungssicherheit lässt sich dadurch in besonderem Maße verbessern.

In gleicher Weise kann der Datensammler, für den Fall, dass er den Funkruf des Endgerätes empfangen hat, die Übertragung der Daten abbrechen und/oder an das Endgerät ein Bestätigungssignal zum Abbruch der Übertragung der Daten senden.

Vorzugsweise sendet das Endgerät die Nachricht in festlegbaren zeitlichen Abständen. Die zeitlichen Abstände können hierbei im Vorfeld festgelegt, zufällig oder pseudozufällig bestimmt werden.

Indem das Endgerät die Nachricht jeweils vor und/oder nach einem oder mehreren Datenblöcken bzw. Teildatenblöcken und/oder Pilotsequenzen sendet, ergibt sich der Vorteil, dass die Übertragung der Daten individuell durch das Endgerät und/oder den Datensammler abgebrochen werden kann, z. B. nach einem festlegbaren Teildatenblock sofern z. B. die Übertragungsqualität nicht ausreichend gut ist.

Erfindungsgemäß erfolgt die Übertragung der Daten auf einer Mehrzahl von Frequenzkanälen (K1-K6). Dadurch kann die Übertragungssicherheit sowie Übertragungsqualität der Daten noch zusätzlich verbessert werden.

Erfindungsgemäß erfolgt die Übertragung von Datenblöcken oder Teildatenblöcken auf mehreren Frequenzen bzw. Frequenzkanälen im sogenannten Frequenzsprungverfahren (Frequency Hopping), um die Übertragungsqualität der Daten zu verbessern. Dabei können Frequenzkanäle vorzugsweise systematisch ausgewählt werden, um z. B. gestörte Frequenzkanäle auszublenden und über ungestörte oder weniger gestörte Frequenzkanäle zu übertragen.

Gemäß einer bevorzugten Ausgestaltung der vorliegenden Erfindung kann das Endgerät und/oder der Datensammler eine Bewertung der Übertragungsqualität bzw. Übertragungssicherheit des Frequenzkanals bzw. der Frequenzkanäle durchführen. Beispielsweise kann die Bewertung anhand einer Störerdetektion, des Signalpegels (Signalleistung, Signalstärke), des Signal-zu-Rausch-Verhältnisses, des Signal-zu-Interferenz-Verhältnisses, eines Wahrscheinlichkeitsquotienten (LLR-Wertes; log likelihood ratio) oder dergleichen erfolgen. Dadurch kann die Übertragungsqualität in einfacher Weise bestimmt werden.

Vorzugsweise kann die Bewertung der Übertragungsqualität derart durchgeführt werden, dass der Empfangskanal auf versteckte Knoten überprüft wird (eine sogenannte "hidden node detection"). Die Datenübertragung kann dabei in bevorzugter Weise unter- oder abgebrochen werden, wenn sich Signale bzw. Sendungen versteckter Knoten auf dem Empfangskanal befinden, welche sich beispielsweise auf die Übertragungsqualität auswirken.

Besonders zweckmäßig ist es, wenn die Nachricht anhand der ermittelten Übertragungsqualität des jeweiligen Frequenzkanals generiert wird. Daraus resultiert der Vorteil, dass die Übertragungsqualität des jeweiligen Frequenzkanals herangezogen wird, um eine Übertragung der Daten fortzusetzen, zu unterbrechen und/oder zu beenden. Beispielsweise kann dadurch eine Datenübertragung abgebrochen werden, sobald eine ausreichende Übertragungsqualität nicht mehr vorhanden ist.

Erfindungsgemäß umfasst die Nachricht eine Start/Stopp-Information bzw. ein Start/Stopp-Signal, um dem Datensammler und/oder dem Endgerät mitzuteilen, dass die Übertragung der Daten fortgesetzt, unterbrochen und/oder beendet werden soll.

Alternativ oder zusätzlich kann die Nachricht auch eine ACK (Acknowledgement)/NACK- (No Acknowledgement / Negative Acknowledgement)-Information umfassen, die dazu hergerichtet ist, dem Datensammler und/oder dem Endgerät mitzuteilen, welche Datenblöcke und/oder Teildatenblöcke erfolgreich übertragen worden sind.

Anschließend können der Datensammler und/oder das Endgerät die nicht erfolgreich übertragenen Daten wiederholt bzw. mehrfach senden, bis diese erfolgreich übertragen sind. Die Übertragungssicherheit sowie die Übertragungsqualität werden dadurch wesentlich verbessert.

Zweckmäßigerweise kann eine Synchronisationssequenz zur Zeitsynchronisation und/oder Frequenzsynchronisation des Endgerätes vorgesehen sein, anhand der die Zeit- bzw. Frequenzreferenzeinrichtung des Endgerätes synchronisiert werden kann.

Gemäß einer bevorzugten Ausgestaltungsvariante der Erfindung sind einer festlegbaren Anzahl von Datenblöcken und/oder Teildatenblöcken jeweils Pilotsequenzen zugeordnet, wie z. B. eine Präambel, Postambel und/oder Inter- bzw. Midambel, d. h. beispielsweise eine Bitfolge, die den Datenblöcken oder Teildatenblöcken voran, nachgestellt oder zwischengeschaltet werden und vom Empfänger als Signal erkannt werden.

Vorzugsweise sind die Pilotsequenzen Teil der Synchronisationssequenz. Beispielsweise kann über eine bestimmte zeitliche Abfolge der Pilotsequenzen eine Zeitsynchronisation der Zeitreferenzeinrichtungen erfolgen.

Zweckmäßigerweise kann das Endgerät die Nachricht auch auf einem ersten Frequenzkanal senden und danach auf einem zweiten Frequenzkanal empfangsbereit sein, um eine Antwort des Datensammlers, wie z. B. eine Übertragung der Daten durch den Datensammler, über den zweiten Frequenzkanal zu empfangen. Dadurch kann z. B. auch ein zufälliger oder pseudozufälliger Wechsel der Frequenzkanäle erfolgen ("Ping-Pong"), sodass ein möglicher Angriff Dritter erschwert und somit die Datensicherheit verbessert wird.

Bei der Funkverbindung zwischen dem Endgerät und dem Datensammler kann es sich insbesondere um bidirektionale Funkverbindung handeln, bei der z. B. alle Kommunikationsteilnehmer Daten, Signale, Funkrufe oder dergleichen senden und empfangen können.

Vorzugsweise liegt die Empfangsbandbreite der Empfangseinheit (z. B. des Endgerätes und/oder des Datensammlers) im Schmalbandbereich. Gemäß einer bevorzugten Ausgestaltung ist die Empfangsbandbreite der jeweiligen Empfangseinheit kleiner 25 kHz, vorzugsweise kleiner 20 kHz, vorzugsweise kleiner 5 kHz, vorzugsweise kleiner 3 kHz, besonders vorzugsweise kleiner 2 kHz. Die Bestimmung der Bandbreite kann insbesondere nach der Norm ETSI EN 300 220-1 V3.1.1 (Stand 02/2017) erfolgen.

Zweckmäßigerweise handelt es sich bei dem Endgerät um einen Wasser-, Wärmemengen-, Gas- oder Stromzähler oder einen anderen aus dem Stand der Technik bekannten Verbrauchszähler. Darüber hinaus können auch Sensorknoten vorgesehen sein, die den Verbrauch an Platz bzw. das Volumen oder den Füllstand erfassen. Hierbei kann es sich z. B. um Füllstandmesser für Mülltonnen oder andere Aufbewahrungsvorrichtungen handeln.

Gemäß einer bevorzugten Ausgestaltung der Erfindung ist eine Vielzahl von Endgeräten und/oder Datensammlern vorgesehen, die innerhalb eines Kommunikationssystems miteinander kommunizieren.

Vorzugsweise ist die Datenrate im Uplink, d. h. vom Endgerät zum Datensammler, im Vergleich zur Datenrate im Downlink, d. h. vom Datensammler zum Endgerät, mindestens um einen Faktor 3, vorzugsweise Faktor 4, besonders vorzugsweise Faktor 5 höher.

Gemäß einer besonderen Ausgestaltung kann die Datenrate innerhalb eines Datenblocks und/oder eines Teildatenblocks variiert werden. Daraus resultiert der Vorteil, dass eine Datenraten- bzw. Datenflusssteuerung innerhalb eines Datenpakets erfolgen kann, sodass die Datenrate schnell, individuell und auch während der Datenübertragung an die jeweilige Übertragungssituation angepasst werden kann, wodurch die Übertragungsqualität und Übertragungszuverlässigkeit in besonderem Maße verbessert wird.

Ferner kann mindestens eine Sendepause zwischen den Sendungen der Datenblöcke und/oder Teildatenblöcke vorgesehen sein.

Vorzugsweise ist die Dauer der Sendepause derart bemessen, dass diese mindestens die gleiche Länge der Sendung des Datenblocks bzw. des Teildatenblocks insbesondere im Uplink aufweist.

In vorteilhafter Weise kann der Datensammler somit nach dem Empfang der Nachricht des Endgeräts die Übertragung der Daten aufgrund des Inhalts der Nachricht während der Kommunikation verlangsamen oder beschleunigen, indem z. B. die Dauer der Sendepausen erhöht oder verringert wird und/oder die Datenrate verringert oder erhöht wird.

Zweckmäßigerweise kann nach der Unterbrechung und/oder dem Abbruch der Übertragung der Daten eine Zeitspanne bis zur Fortsetzung der Übertragung und/oder erneuten Übertragung festgelegt werden. Dadurch kann die Übertragung der Daten auf einen späteren Zeitpunkt verschoben werden. In einfacher Weise kann die Festlegung der Zeitspanne durch die sendende und/oder empfangende Einheit erfolgen, d. h. das Endgerät und/oder der Datensammler, wobei im Anschluss die festgelegte Zeitspanne der jeweils anderen Einheit (Endgerät bzw. Datensammler) übermittelt und gegebenenfalls durch diese wieder bestätigt wird.

Ferner kann als Kriterium zum Senden der Uplink-Nachricht vom Endgerät zum Datensammler, die Kommunikationsqualität zwischen Datensammler und Endgerät vorgesehen sein. Beispielsweise kann das Endgerät die Nachricht senden, um mitzuteilen, dass die Downlink-Kommunikation zwischen dem Datensammler und dem Endgerät bzw. der Empfang seitens des Endgerätes schlecht, beschädigt oder suboptimal ist.

Gemäß einer besonderen Ausgestaltung des Verfahrens kann als Kriterium zum Senden der Uplink-Nachricht vom Endgerät zum Datensammler, der Status der Energieversorgung des Endgerätes vorgesehen sein. Somit kann das Endgerät z. B. eine Nachricht an den Datensammler senden, um dem Datensammler den Status der Energieversorgung des Endgerätes mitzuteilen, beispielsweise dass die Energieversorgung bzw. der Energiepuffer eine niedrige Spannung aufweist. Dadurch kann z. B. auch ein bevorstehender Austausch der Energieversorgung bzw. des Endgerätes angezeigt werden.

In dem Verfahren zum Übertragen von Daten zwischen einem Endgerät und einem Datensammler per Funk befindet sich der Datensammler zeitweise oder dauerhaft auf Empfang. Das Endgerät versucht in periodischen Zeitabständen aus einer Ruhephase heraus, eine Kommunikation mit dem Datensammler herzustellen, um die Daten vollständig oder teilweise an den Datensammler zu senden oder Daten vom Datensammler zu empfangen. Beispielsweise kann das Endgerät hierzu aus der Ruhephase heraus einen Funkruf an den Datensammler senden und danach für eine festlegbare Zeitdauer auf Empfang gehen, um die Kommunikation mit dem Datensammler aufzubauen. Alternativ kann auch das Endgerät aus der Ruhephase für eine festlegbare Zeitdauer auf Empfang gehen, wobei der Datensammler innerhalb dieser ihm bekannten Zeitdauer z. B. einen Funkruf an das Endgerät sendet, um die Kommunikation mit dem Endgerät aufzubauen. Für den Fall, dass der jeweilige Empfänger die Nachricht empfängt, kann er die Daten oder ein Bestätigungssignal an den Sender der Nachricht senden, um dann die Daten vollständig oder teilweise zu übertragen, d. h. an den Datensammler oder das Endgerät zu senden. Erfindungsgemäß wird eine Bewertung der Übertragungsqualität des jeweiligen Frequenzkanals durchgeführt, wobei eine Entscheidung anhand der Übertragungsqualität des jeweiligen Frequenzkanals getroffen wird, ob die Datenübertragung über diesen Frequenzkanal stattfinden soll oder nicht. Daraus resultiert der Vorteil, dass z. B. der Datensammler das Übertragen der Daten an die Übertragungsqualitäten der jeweiligen Frequenzkanäle anpassen kann. Ferner könnten auch bestimmte Endgeräte priorisiert werden, z. B. wenn die letzte Datenübertragung länger zurück liegt oder es sich um ein Endgerät handelt, welches vermehrt schlechte Übertragungsqualitäten aufweist oder schwer erreichbar ist. Die Übertragungssicherheit sowie die Übertragungsqualität werden dadurch erheblich verbessert.

Vorzugsweise erfolgt die Bewertung der Übertragungsqualität anhand der Signalleistung und/oder der mittleren Signalleistung und/oder der Streuung der Signalleistung auf dem jeweiligen Frequenzkanal. Beispielsweise kann die Übertragungsqualität aufgrund von einer Störermessung ermittelt werden, wobei für die Störermessung die Signalleistung (der Datenübertragung) der Störerleistung gegenübergestellt wird bzw. mit letzterer verglichen wird.

### Beschreibung der Erfindung anhand von Ausführungsbeispielen

Zweckmäßige Ausgestaltungen der vorliegenden Erfindung werden anhand von Zeichnungsfiguren nachstehend näher erläutert. Es zeigen:
- Fig. 1: eine vereinfachte, schematische Darstellung eines Anwendungsbeispiels des erfindungsgemäßen Verfahrens;
- Fig. 2: eine vereinfachte, schematische Darstellung einer Datensendung, die mehrere Datenpakete umfasst;
- Fig. 3: eine vereinfachte, schematische Darstellung einer Datensendung mit mehreren Datenpaketen sowie zugeordneten Pilotsequenzen;
- Fig. 4: eine vereinfachte, schematische Darstellung einer Ausgestaltung einer Datensendung mit vorangestellter Detektion versteckter Knoten;
- Fig. 5: eine vereinfachte, schematische Darstellung einer weiteren Ausgestaltung einer Datensendung;
- Fig. 6: eine vereinfachte, schematische Darstellung einer Sendeabfolge zwischen einem Verbrauchszähler und einem Datensammler, sowie
- Fig. 7: eine vereinfachte, schematische Darstellung eines Frequenzkanalmusters.

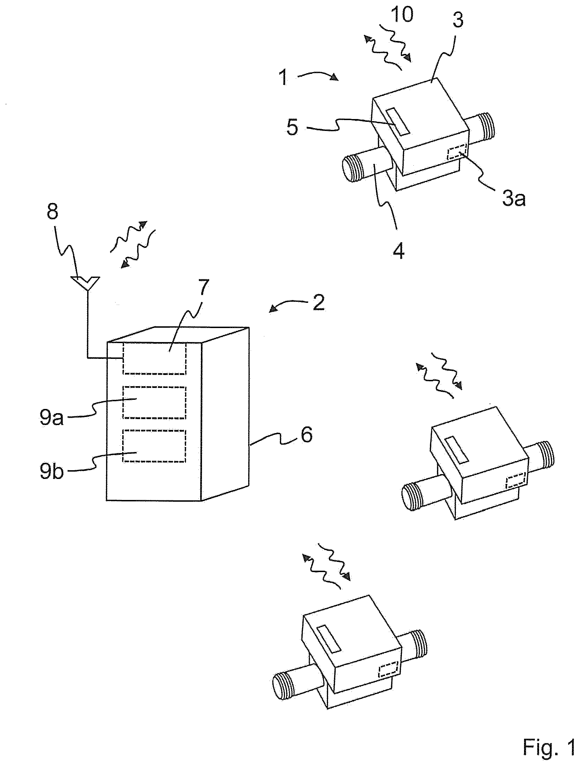

Fig. 1 zeigt mehrere Endgeräte, die als Verbrauchsmessgeräte 1 ausgestaltet sind, und einen Datensammler 2 bzw. Datenkonzentrator, wobei zwischen den Verbrauchsmessgeräten 1 und dem Datensammler 2 eine bidirektionale Übertragung von Daten, z. B. Verbrauchs-, Programm- oder Betriebsdaten, per Funk mittels des erfindungsgemäßen Verfahrens erfolgt. Bei der Übertragung der Daten handelt es sich dementsprechend um eine Datenübertragung, bei der die Kommunikationsteilnehmer, wie das Verbrauchsmessgerät 1 und der Datensammler 2, sowohl Sender als auch Empfänger sein können. Hierbei kann die Übertragung der Daten z. B. über die ISM- und/oder SRD-Frequenzbänder erfolgen.

Die Verbrauchsmessgeräte 1 in Fig. 1 sind als Fluidzähler (z. B. Wasser-, Gas- oder Wärmemengenzähler) ausgestaltet, welche jeweils ein Elektronikgehäuse 3 zur Aufnahme der Elektronikkomponenten umfassen, die der Übersichtlichkeit halber in Fig. 1 nicht dargestellt sind, wie z. B. eine Steuer- und Auswerteeinheit sowie einen Mikrokontroller und ein Kommunikationsmodul bzw. eine Kommunikationseinrichtung. Ferner ist jeweils eine Energieversorgung 3a zur energetischen Versorgung des Verbrauchsmessgerätes 1 vorgesehen, wie z. B. eine Batterie oder ein Akkumulator. Ein derartiges Verbrauchsmessgerät 1 umfasst zudem ein Anschlussgehäuse 4 zum Anschluss des Verbrauchszählers 1 in ein ebenfalls nicht dargestelltes Versorgungsnetz, wie z. B. die Trinkwasserversorgung eines Haushaltes. Ferner umfassen die Verbrauchszähler 1 jeweils ein Mittel zur Verbrauchsbestimmung (ebenfalls in Fig. 1 nicht dargestellt), anhand dessen der Verbrauch an einem Versorgungsmedium ermittelt wird. Beispielsweise kann es sich hierbei um eine Ultraschallwandleranordnung handeln, bei der Ultraschallsignale entlang einer zwischen zwei Ultraschallwandlern befindlichen Messstrecke in und entgegen der Durchströmungsrichtung des Fluids (z. B. Wasser) gesendet werden. Aus dem Laufzeitunterschied der Ultraschallsignale in und entgegen der Durchströmungsrichtung des Mediums kann z. B. die Durchflussmenge und somit der Verbrauch ermittelt werden. Der ermittelte Verbrauch kann anschließend über eine Antenne der Kommunikationseinrichtung an den Datensammler 2 übertragen werden. Zudem ist am Verbrauchsmessgerät 1 eine Anzeigevorrichtung vorgesehen, z. B. ein Display 5, zur Anzeige der aktuellen Verbrauchswerte bzw. des Zählerstands.

Darüber hinaus umfassen die Verbrauchsmessgeräte 1 jeweils eine Zeit- und/oder Frequenzreferenzeinrichtung (ebenfalls nicht dargestellt), die dazu hergerichtet sind, die Zeit und/oder die Frequenz vorzugeben und/oder einzustellen. Als Referenzeinrichtung wird beispielsweise ein Schwingquarz mit einer bestimmten Fehlerabweichung (z. B. 5 ppm) eingesetzt. Aufgrund der Fehlerabweichung ist es gegebenenfalls notwendig, die Referenzeinrichtungen z. B. mit dem Datensammler 2 zu synchronisieren, um zu gewährleisten, dass sender- und empfängerseitig die für die Datenübertragung festgelegte Uhrzeit bzw. die festgelegte Frequenz (bzw. Frequenzkanal) verwendet wird.

Der Datensammler 2 umfasst ein Gehäuse 6, ein Kommunikationsmodul 7 mit Antenne 8, insbesondere zur Übertragung der Daten, sowie einen Datenspeicher 9a zum Sammeln bzw. Speichern der Daten. Der Datensammler 2 kann die Daten z. B. an eine, in den Figuren nicht dargestellte, übergeordnete Zentraleinheit, wie z. B. die Schaltzentrale des Versorgers drahtlos oder drahtgebunden übermitteln. Ferner umfasst der Datensammler 2 eine Energieversorgung 9b. Hierbei kann es sich um einen Netzanschluss oder einen Energiespeicher, wie z. B. eine Batterie oder einen Akkumulator handeln.

Der Datensammler 2 befindet sich zeitweise oder dauerhaft auf Empfang, zum Empfang der Daten von einem Verbrauchsmessgerät 1 oder der Zentraleinheit. Demgegenüber befindet sich das jeweilige Verbrauchsmessgerät 1 meistens in einer Ruhephase, in welcher das Verbrauchsmessgerät 1 zwar den aktuellen Verbrauch ermittelt und gegebenenfalls speichert, jedoch vorzugsweise nicht sende- und/oder empfangsbereit ist, um Energie zu sparen. Für den Fall, dass das Verbrauchsmessgerät 1 Daten senden will oder bereit ist, Daten vom Datensammler 2 zu empfangen, wie z. B. Programmdaten eines Firmwareupdates, kann z. B. das Verbrauchsmessgerät 1 versuchen, eine Kommunikation mit dem Datensammler 2 aufzubauen ("PUSH-Modus"). Das Verbrauchsmessgerät 1 kann hierzu einen Funkruf in festlegbaren zeitlichen Abständen aus der Ruhephase heraus aussenden und danach für eine festlegbare Zeitdauer zum Aufbau der Kommunikation mit dem Datensammler 2 auf Empfang gehen, d. h. ein Empfangsfenster öffnen, um die Antwort des Datensammlers 2 bzw. die Daten oder ein Bestätigungssignal zum Senden der Daten durch das Verbrauchsmessgerät 1 zu erhalten. Als Funkruf kann z. B. ein kurzes Signal oder ein Teil der Daten (wie z. B. Datenblöcke, Teildatenblöcke oder nur Bits davon) vorgesehen sein. Alternativ kann aber auch der Datensammler 2 versuchen, die Kommunikation mit dem Verbrauchsmessgerät 1 einzuleiten ("PULL-Modus"), indem der Datensammler 2 einen Funkruf aussendet und das Verbrauchsmessgerät 1 in festlegbaren zeitlichen Abständen aus der Ruhephase heraus für eine vorgegebene Zeitdauer auf Empfang geht. Während dieser Empfangszeit kann das Verbrauchsmessgerät 1 den Funkruf des Datensammlers 2 empfangen, um die Kommunikation zwischen Verbrauchsmessgerät 1 und Datensammler 2 aufzubauen. Als Funkruf kann hierbei anstelle oder neben den oben beschriebenen Varianten auch ein Beacon vorgesehen sein.

Zweckmäßigerweise kann der Datensammler 2, für den Fall, dass er den Funkruf des Verbrauchsmessgerätes 1 empfangen hat, die zu übertragenden Daten an das Verbrauchsmessgerät 1 senden. Ferner kann der Datensammler 2 auch ein Bestätigungssignal an das Verbrauchsmessgerät 1 senden und dem Verbrauchsmessgerät 1 damit signalisieren, dass dieses die Daten vollständig oder teilweise an den Datensammler 2 senden soll, sodass dieser die Daten empfängt, oder dass dieses wieder in die Ruhephase übergeht.

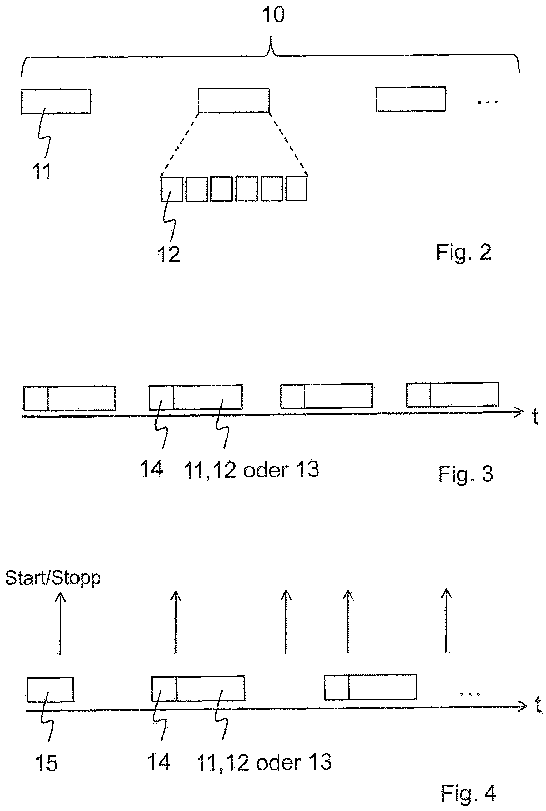

Fig. 2 zeigt eine Darstellung einer Datensendung 10, die mehrere Datenpakete 11 umfasst, die jeweils in Datenblöcke 12 unterteilt sind, die wiederum jeweils in Teildatenblöcke 13 aufgeteilt sind. Beispielsweise kann ein Datenpaket 192 Byte, ein Datenblock 32 Byte und ein Teildatenblock 4 Byte umfassen. Die gesamte Datensendung 10 kann dabei stückweise übertragen werden. Mindestens eine festlegbare Anzahl von Datenblöcken 12 und/oder Teildatenblöcken 13 kann zudem eine Pilotsequenz 14 umfassen, wie in Fig. 3 dargestellt. Bei der Pilotsequenz 14 kann es sich z. B. um eine Prä-, Inter- (bzw. Mid-) und/oder Postambel handeln, die als Teil des jeweiligen Blocks bzw. als Hop oder Bitfolge den jeweiligen Datenblöcken 12 und/oder Teildatenblöcken 13 vorangestellt, zwischengeschaltet und/oder nachgestellt wird.

Die Pilotsequenzen 14 mehrerer Datenblöcke 12 bzw. Teildatenblöcke 13 können als Synchronisationssequenz zur Synchronisation der Zeit- bzw. Frequenzreferenzeinrichtungen der Verbrauchsmessgeräte 1 dienen. Beispielsweise dadurch, dass die Pilotsequenzen 14 einen definierten zeitlichen Abstand zueinander aufweisen, der allen Kommunikationsteilnehmern bekannt ist und aus dem die Zeitabweichung ermittelbar ist.

Die Datenübertragung erfolgt vorzugsweise im Schmalbandbereich, d. h. die Empfangsbandbreite des jeweiligen Verbrauchsmessgerätes 1 ist bevorzugt kleiner 25 kHz, vorzugsweise kleiner 20 kHz, vorzugsweise kleiner 5 kHz, vorzugsweise kleiner 3 kHz, besonders vorzugsweise kleiner 2 kHz. Die Bestimmung der Bandbreite kann hierbei z. B. nach der Norm ETSI EN 300 220-1 V3.1.1 (Stand 02/2017) erfolgen. Normalerweise würde eine derartige Empfangsbandbreite längere Zeiten voraussetzten, in denen die Verbrauchsmessgeräte 1 empfangsbereit sind, d. h. das jeweilige Verbrauchsmessgerät 1 müsste verhältnismäßig lange empfangsbereit sein, um die Daten zu empfangen, wodurch sich der Energieverbrauch erheblich vergrößert. Somit wird auch die Energie des Verbrauchsmessgerätes 1 zusätzlich verbraucht, wenn z. B. der betreffende Frequenzkanal gerade belegt oder gestört ist. Zudem wird z. B. die verfügbare Sendezeit, d. h. der Tastgrad, des Datensammlers 2 verschwendet, indem dieser Daten sendet ohne dass die Daten vom Verbrauchsmessgerät 1 empfangen werden können.

Durch die Anwendung des vorliegenden Verfahrens kann dieses Problem umgangen werden, indem z. B. das Verbrauchsmessgerät 1 dem Datensammler 2 das Übertragen der Daten über ein Feedback bzw. eine Nachricht 15 während der Kommunikation signalisiert und/oder bestätigt und somit die Datenübertragung steuert. Hierzu sendet das Verbrauchsmessgerät 1 in vorzugsweise festlegbaren zeitlichen Abständen während der Kommunikation die Nachricht 15 an den Datensammler 2, womit das Verbrauchsmessgerät 1 dem Datensammler 2 mitteilt, ob die Übertragung der Daten fortgesetzt, unterbrochen und/oder beendet werden soll, sozusagen eine Datenflusssteuerung durch das Verbrauchsmessgerät 1 bzw. den Empfänger. Beispielsweise kann das Verbrauchsmessgerät 1 die Datenübertragung dadurch abbrechen.

Eine Übertragung der Daten, kann z. B. dadurch erfolgen, dass zunächst eine Detektion versteckter Knoten (hidden node detection) durchgeführt wird, bevor die ersten Datenblöcke 12, Teildatenblöcke 13 oder deren Pilotsequenzen 14 vom Verbrauchsmessgerät 1 gesendet werden, wie in Fig. 4 dargestellt. Der durchschnittliche Signalpegel und die Streuung der Signalleistung auf einem bestimmten Frequenzkanal sind hierbei dem Datensammler 2 bekannt bzw. werden von diesem und/oder dem Verbrauchsmessgerät 1 ermittelt. Beispielsweise durch eine Bewertung der Übertragungsqualität des jeweiligen Frequenzkanals anhand der letzten übertragenen Datenblöcke 12 bzw. Teildatenblöcke 13 und einer daraus ermittelten Statistik. Wenn der Signalpegel auf dem jeweiligen Frequenzkanal beispielsweise einen festlegbaren Grenzwert übersteigt, d. h. eine schlechte Übertragungsqualität aufweist, wird der entsprechende Frequenzkanal abgewertet.

Die schlechte Übertragungsqualität kann z. B. durch auf dem gleichen Frequenzkanal sendende und vom Verbrauchsmessgerät 1 oder vom Datensammler 2 nicht ermittelbare Störer, Sender bzw. Knoten (hidden nodes) verursacht werden.

Dabei kann es sich z. B. auch um ein anderes Verbrauchsmessgerät 1 handeln, welches Daten zum Datensammler 2 übertragen will. Die Datenübertragung wird hierbei bereits abgebrochen und/oder auf einen späteren Zeitpunkt verschoben. Hierzu sendet das Verbrauchsmessgerät 1 im Uplink eine Nachricht 15 zum Unterbrechen bzw. Beenden der Datenübertragung, z. B. mit der Information bzw. dem Inhalt "Stopp", an den Datensammler 2, oder der Datensammler 2 sendet im Downlink eine Nachricht 15 zum Unterbrechen bzw. Beenden der Datenübertragung, z. B. mit der Information bzw. dem Inhalt "Stopp", an das Verbrauchsmessgerät 1. Für den Fall, dass der Signalpegel unterhalb des Grenzwertes liegt, d. h. die Übertragungsqualität auf dem Frequenzkanal als gut bewertet worden ist, wird vorzugsweise der nächste Frequenzkanal überprüft, z. B. mittels der Pilotsequenzen 14 ("Synchronisationshops") des ersten Datenblocks 12. Werden die Datenblöcke 12 bzw. Teildatenblöcke 13 nicht oder nur teilweise übertragen sendet das Verbrauchsmessgerät 1 oder der Datensammler 2 erneut eine Nachricht "Stopp" zum Unterbrechen bzw. Beenden der Datenübertragung an den Datensammler 2 bzw. das Verbrauchsmessgerät 1, woraufhin die Datenübertragung vom jeweiligen Empfänger und/oder Sender unterbrochen oder beendet wird. Demgegenüber sendet das Verbrauchsmessgerät 1 (oder der Datensammler 2) zur Bestätigung oder zum Beginnen der Datenübertragung z. B. eine Nachricht 15 mit der Information "Start" oder "Weiter" an den Datensammler 2 (bzw. das Verbrauchsmessgerät 1).

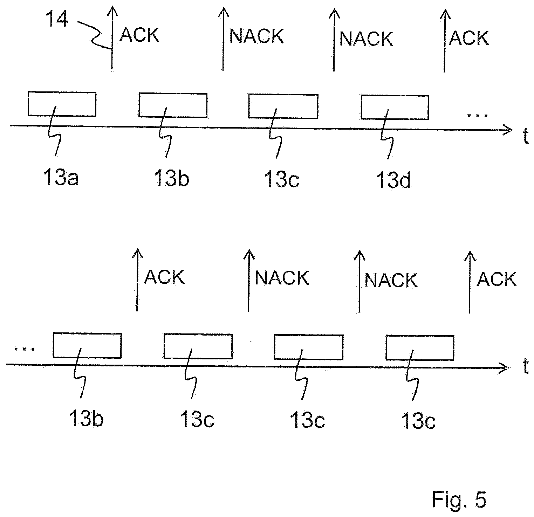

Die Nachricht 15 kann somit eine Start/Stopp-Information umfassen, um dem Datensammler 2 oder dem Verbrauchsmessgerät 1 mitzuteilen, dass die Übertragung der Daten fortgesetzt, unterbrochen und/oder beendet werden soll. Alternativ oder zusätzlich umfasst die Nachricht 15 eine ACK/NACK-Information, die dazu hergerichtet ist, dem Datensammler 2 oder dem verbrauchsmessgerät 1 mitzuteilen, welche Datenblöcke 12 und/oder Teildatenblöcke 13 erfolgreich übertragen worden sind. Die nicht oder nur teilweise übertragenen Datenblöcke 12 und/oder Teildatenblöcke 13 können anschließend so oft wiederholt gesendet werden, bis diese erfolgreich übertragen worden sind und folglich mit einer ACK-Information vom Empfänger an den Sender bestätigt wurden. Beispielsweise können die Teildatenblöcke 13a-13d, wie in Fig. 5 gezeigt, so lange gesendet werden, bis diese vollständig übertragen wurden.

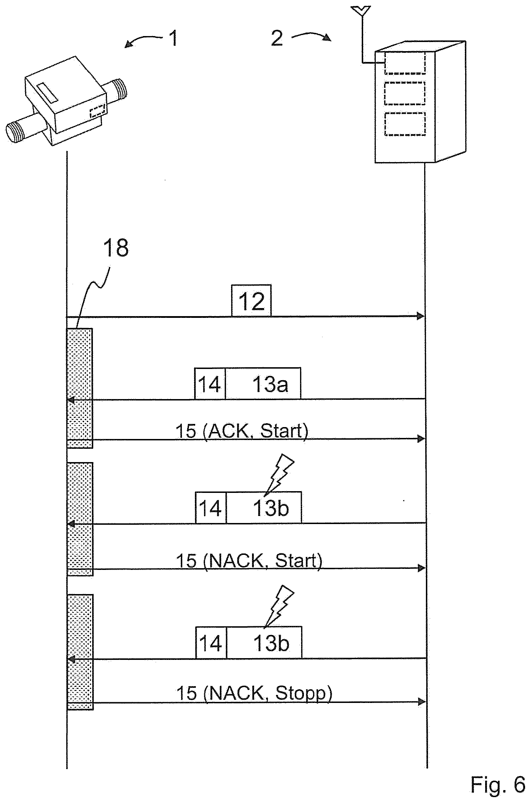

Eine Ausgestaltung einer Sendeabfolge ist in Fig. 6 dargestellt, bei der das Verbrauchsmessgerät 1 zunächst aus der Ruhephase heraus einen Funkruf an den Datensammler 2 sendet, um z. B. die Daten eines Firmwareupdates anzufordern. Als Funkruf dient der Teildatenblock 12, den der Datensammler 2 empfängt. Im Anschluss an die Sendung des Funkrufs öffnet das Verbrauchsmessgerät 1 ein Empfangsfenster 18, zum Empfang einer Antwort des Datensammlers 2. Der Datensammler 2 antwortet daraufhin mit dem Senden des Teildatenblocks 13a mit vorangeschalteter Pilotsequenz 14. Das Verbrauchsmessgerät 1 empfängt den Teildatenblock 13a mit Pilotsequenz 14, d. h. die Kommunikation ist somit bereits mit dem Empfang der Pilotsequenz 14 aufgebaut. Nun sendet das Verbrauchsmessgerät 1 eine Nachricht 15 an den Datensammler 2, die dem Datensammler 2 mitteilt, dass der Teildatenblock 13a erfolgreich übertragen wurde ("ACK") und die Übertragung fortgesetzt werden soll ("Start"). Im Anschluss daran öffnet das Verbrauchsmessgerät 1 erneut ein Empfangsfenster 18. Nach dem Empfang der Nachricht 15 (ACK/Start) antwortet der Datensammler 2 wiederum mit dem Senden des Teildatenblocks 13b mit Pilotsequenz 14. Der Teildatenblock 13b wird jedoch vom Verbrauchsmessgerät 1 nicht erfolgreich empfangen, z. B. aufgrund eines Störers auf dem betreffenden Frequenzkanal, woraufhin das Verbrauchsmessgerät 1 den Teildatenblock 13b erneut anfordert mit der Nachricht 15 (NACK/Start). Daraufhin sendet der Datensammler 2 erneut den Teildatenblock 13b an das Verbrauchsmessgerät 1.

Nachdem das Verbrauchsmessgerät 1 den Teildatenblock 13b wiederum nicht erfolgreich empfangen konnte, bricht das Verbrauchsmessgerät 1 die Übertragung mit der Nachricht 15 (NACK/Stopp) an den Datensammler 2 ab. Anschließend geht es wieder in die Ruhephase bzw. den Standbybetrieb über, um Energie zu sparen und die Übertragung der Daten auf einen Zeitpunkt mit besseren Übertragungsbedingungen zu verlegen, z. B. mehrere Millisekunden, Sekunden oder Minuten später. Nach dem Empfang der Nachricht 15 (NACK/Stopp) beendet auch der Datensammler 2 den Übertragungsvorgang. Die Kommunikation zwischen Verbrauchsmessgerät 1 und Datensammler 2 ist somit beendet. Darüber hinaus kann das Verbrauchsmessgerät 1 die bereits empfangenen Pilotsequenzen 14 zur Zeit- und/oder Frequenzsynchronisation nutzen.

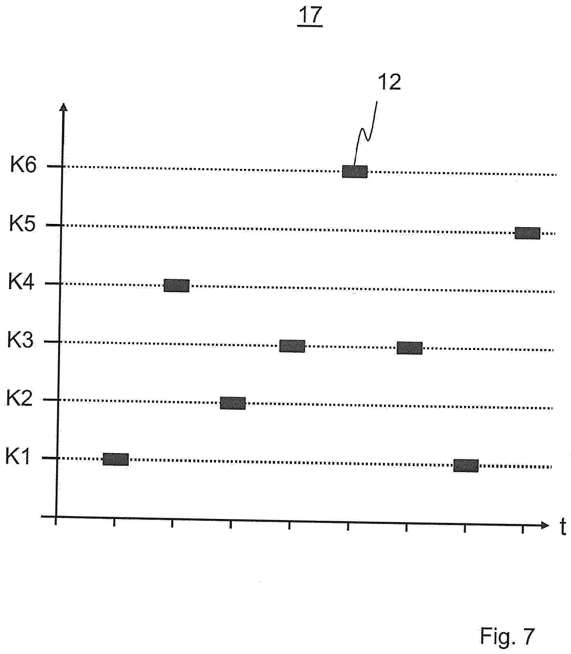

Gemäß einer bevorzugten Ausgestaltung der Erfindung kann die Übertragung der Daten auch anhand eines Frequenzsprungverfahrens durchgeführt werden, bei dem die Übertragung der Daten über wahlweise mehrere, unterschiedliche Frequenzkanäle K1-K6 erfolgt, um die Wahrscheinlichkeit einer erfolgreichen Übertragung zu erhöhen. Beispielsweise kann dem Datensammler 2 auch ein vom Verbrauchsmessgerät 1 vorgeschlagener Frequenzkanalwechsel über die Nachricht 15 mitgeteilt werden, welchen der Datensammler 2 wiederum durch eine Antwort an das Verbrauchsmessgerät 1 bestätigt, um den Frequenzkanalwechsel herbeizuführen. Eine bestimmte Abfolge von Frequenzkanälen K1-K6, über die jeweils ein Datenblock 12 und/oder ein Teildatenblock 13 oder nur Bits bzw. Bytes davon übertragen werden, wird als sogenanntes Frequenzkanalmuster 17 bezeichnet. Fig. 7 zeigt eine Ausgestaltungsvariante eines derartigen Frequenzkanalmusters 17, bei dem Teildatenblöcke 13 über sechs verschiedene Frequenzkanäle K1-K6 übertragen werden. Im Rahmen der Erfindung können jedoch sehr viel mehr Frequenzkanäle K1-Kn und auch mehrere Frequenzkanalmuster 17 zur Übertragung der Datenblöcke 12 und/oder Teildatenblöcke 13 vorgesehen sein.

Ausdrücklich vom Offenbarungsgehalt umfasst sind auch Einzelmerkmalskombinationen (Unterkombinationen) sowie mögliche, nicht in den Zeichnungsfiguren dargestellte Kombinationen einzelner Merkmale unterschiedlicher Ausgestaltungsformen.

### BEZUGSZEICHENLISTE

- 1: Verbrauchsmessgerät
- 2: Datensammler
- 3: Elektronikgehäuse
- 3a: Energieversorgung
- 4: Anschlussgehäuse
- 5: Display
- 6: Gehäuse
- 7: Kommunikationsmodul
- 8: Antenne
- 9a: Datenspeicher
- 9b: Energieversorgung
- 10: Datensendung
- 11: Datenpaket
- 12: Datenblock
- 13: Teildatenblock
- 13a-13d: Teildatenblock
- 14: Pilotsequenz
- 15: Nachricht
- 16: Detektion versteckter Knoten
- 17: Frequenzkanalmuster
- 18: Empfangsfenster

- K1-K6: Frequenzkanal

## Patentansprüche

1. Verfahren zum Übertragen von Daten zwischen einem Endgerät und einem Datensammler (2) per Funk, bei dem sich der Datensammler (2) zeitweise oder dauerhaft auf Empfang befindet und bei dem
das Endgerät aus einer Ruhephase heraus eine Kommunikation mit dem Datensammler (2) herstellt, um die Daten vollständig oder teilweise an den Datensammler (2) zu senden und/oder vom Datensammler (2) zu empfangen, oder
der Datensammler (2) eine Kommunikation mit dem Endgerät herstellt, um die Daten vollständig oder teilweise an das Endgerät zu senden und/oder vom Endgerät zu empfangen,
nach dem Aufbau der Kommunikation das Endgerät eine Nachricht (15) an den Datensammler (2) sendet und der Datensammler (2) nach dem Empfang der Nachricht (15) die Übertragung der Daten aufgrund des Inhalts der Nachricht (15) während der Kommunikation fortsetzt, unterbricht und/oder beendet, und
die Übertragung der Daten in Form von Datenpaketen (11) erfolgt, die jeweils mehrere Datenblöcke (12) und/oder Teildatenblöcke (13) umfassen,
wobei
die Übertragung der Daten auf einer Mehrzahl von Frequenzkanälen (K1-K6) erfolgt, indem zur Übertragung der Daten ein Frequenzsprungverfahren verwendet wird, bei dem die Datenblöcke (12) und/oder die Teildatenblöcke (13) auf mehreren Frequenzkanälen (K1-K6) übertragen werden,
die Nachricht (15) eine Start-/Stopp-Information umfasst, um dem Datensammler (2) mitzuteilen, dass er die Übertragung der Daten fortsetzt, unterbricht und/oder beendet und
das Endgerät ein Verbrauchsmessgerät (1) oder ein Sensor ist.

2. Verfahren nach Anspruch 1, **dadurch gekennzeichnet, dass** das Endgerät in zeitlichen Abständen aus der Ruhephase heraus einen Funkruf aussendet und danach für eine vorgegebene Zeitdauer zum Aufbau der Kommunikation mit dem Datensammler (2) auf Empfang geht und/oder der Datensammler (2) einen Funkruf zum Aufbau der Kommunikation mit dem Endgerät aussendet, wobei das Endgerät in zeitlichen Abständen aus der Ruhephase heraus auf Empfang geht, um den Funkruf zu empfangen.

3. Verfahren nach einem der vorhergehenden Ansprüche, **dadurch gekennzeichnet, dass** der Datensammler (2), für den Fall, dass er den Funkruf des Endgerätes empfangen hat, an das Endgerät die Daten und/oder ein Bestätigungssignal zum Übertragen der Daten sendet.

4. Verfahren nach einem der vorhergehenden Ansprüche, **dadurch gekennzeichnet, dass** der Datensammler (2), für den Fall, dass er den Funkruf des Endgerätes empfangen hat, die Übertragung der Daten abbricht und/oder an das Endgerät ein Bestätigungssignal zum Abbruch der Übertragung der Daten sendet.

5. Verfahren nach einem der vorhergehenden Ansprüche, **dadurch gekennzeichnet, dass** die Nachricht (15) in festlegbaren zeitlichen Abständen gesendet wird.

6. Verfahren nach einem der vorhergehenden Ansprüche, **dadurch gekennzeichnet, dass** die Nachricht (15) jeweils vor und/oder nach einem oder mehreren Datenblöcken (12), Teildatenblöcken (13) und/oder Pilotsequenzen (14) gesendet wird.

7. Verfahren nach Anspruch 1, **dadurch gekennzeichnet, dass** eine Bewertung der Übertragungsqualität der Frequenzkanäle (K1-K6) durchgeführt wird.

8. Verfahren nach Anspruch 7, **dadurch gekennzeichnet, dass,** die Bewertung der Übertragungsqualität derart durchgeführt wird, dass der Empfangskanal auf versteckte Knoten überprüft wird und die Datenübertragung unter- oder abgebrochen wird, wenn versteckte Knoten über den Empfangskanal ermittelt werden.

9. Verfahren nach Anspruch 1, 7 oder 8, **dadurch gekennzeichnet, dass** die Nachricht (15) anhand der Übertragungsqualität des jeweiligen Frequenzkanals (K1-K6) generiert wird.

10. Verfahren nach einem der vorhergehenden Ansprüche, **dadurch gekennzeichnet, dass** die Nachricht (15) eine ACK/NACK-Information umfasst, um dem Datensammler (2) und/oder dem Endgerät mitzuteilen, welche Datenblöcke (12) und/oder Teildatenblöcke (13) erfolgreich übertragen worden sind.

11. Verfahren nach einem der vorhergehenden Ansprüche, **dadurch gekennzeichnet, dass** der Datensammler (2) und/oder das Endgerät die nicht erfolgreich übertragenen Daten wiederholt senden, bis diese erfolgreich übertragen sind.

12. Verfahren nach einem der vorhergehenden Ansprüche, **dadurch gekennzeichnet, dass** eine Synchronisationssequenz zur Zeit- und/oder Frequenzsynchronisation des Endgerätes vorgesehen ist.

13. Verfahren nach einem der vorhergehenden Ansprüche, **dadurch gekennzeichnet, dass** den Datenblöcken (12) und/oder den Teildatenblöcken (13) oder einer festlegbaren Anzahl von Datenblöcken (12) und/oder Teildatenblöcken (13) eine Pilotsequenz (14) zugeordnet ist.

14. Verfahren nach Anspruch 13, **dadurch gekennzeichnet, dass** die Pilotsequenz bzw. Pilotsequenzen (14) ein Teil der Synchronisationssequenz ist bzw. sind.

15. Verfahren nach einem der vorhergehenden Ansprüche, **dadurch gekennzeichnet, dass** das Endgerät die Nachricht (15) auf einem ersten Frequenzkanal sendet und danach auf einem zweiten Frequenzkanal empfangsbereit ist, um eine mögliche Übertragung der Daten durch den Datensammler (2) auf dem zweiten Frequenzkanal zu empfangen.

16. Verfahren nach einem der vorhergehenden Ansprüche, **dadurch gekennzeichnet, dass** es sich bei der Übertragung der Daten um eine bidirektionale Datenübertragung handelt.

17. Verfahren nach einem der vorhergehenden Ansprüche, **dadurch gekennzeichnet, dass** es sich bei der Übertragung der Daten um eine Schmalbandübertragung handelt.

18. Verfahren nach Anspruch 17, **dadurch gekennzeichnet, dass,** die Empfangsbandbreite des jeweiligen Empfängers kleiner 25 kHz, vorzugsweise kleiner 20 kHz, vorzugsweise kleiner 5 kHz, vorzugsweise kleiner 3 kHz, besonders vorzugsweise kleiner 2 kHz ist.

19. Verfahren nach einem der vorhergehenden Ansprüche, **dadurch gekennzeichnet, dass** es sich bei dem Verbrauchsmessgerät um einen Wasser-, Wärmemengen-, Gas- oder Stromzähler handelt.

20. Verfahren nach einem der vorhergehenden Ansprüche, **dadurch gekennzeichnet, dass** mehrere Endgeräte und/oder Datensammler (2) vorgesehen sind.

21. Verfahren nach einem der vorhergehenden Ansprüche, **dadurch gekennzeichnet, dass** die Datenrate im Uplink im Vergleich zur Datenrate im Downlink mindestens um Faktor 3, vorzugsweise um Faktor 4, besonders vorzugsweise um Faktor 5 größer ist.

22. Verfahren nach einem der vorhergehenden Ansprüche, **dadurch gekennzeichnet, dass** die Datenrate innerhalb eines Datenblocks (12) und/oder Teildatenblocks (13) variiert wird.

23. Verfahren nach einem der vorhergehenden Ansprüche, **dadurch gekennzeichnet, dass** mindestens eine Sendepause insbesondere zwischen den Sendungen Datenblöcke (12) und/oder Teildatenblöcke (13) vorgesehen ist, wobei die Dauer der Sendepause derart bemessen ist, dass diese mindestens die gleiche Länge des jeweiligen Datenblocks (12) und/oder Teildatenblocks (13) aufweist.

24. Verfahren nach einem der vorhergehenden Ansprüche, **dadurch gekennzeichnet, dass** der Datensammler (2) nach dem Empfang der Nachricht (15) die Übertragung der Daten verlangsamt oder beschleunigt, indem die Dauer der Sendepausen erhöht oder verringert und/oder die Datenrate verringert oder erhöht wird.

25. Verfahren nach einem der vorhergehenden Ansprüche, **dadurch gekennzeichnet, dass** nach dem Abbruch und/oder der Unterbrechung der Datenübertragung eine Zeitspanne bis zur erneuten Übertragung und/oder Fortsetzung der Übertragung festgelegt wird.

26. Verfahren nach einem der vorhergehenden Ansprüche, **dadurch gekennzeichnet, dass** das Endgerät die Nachricht (15) sendet, um mitzuteilen, dass die Kommunikation zwischen Datensammler (2) und Endgerät schlecht, beschädigt oder suboptimal ist.

27. Verfahren nach einem der vorhergehenden Ansprüche, **dadurch gekennzeichnet, dass** das Endgerät die Nachricht (15) sendet, um den Status einer Energieversorgung (3a) des Endgerätes mitzuteilen.

28. Verfahren nach Anspruch 7, **dadurch gekennzeichnet, dass** die Bewertung der Übertragungsqualität anhand der Signalleistung und/oder der mittleren Signalleistung und/oder der Streuung der Signalleistung auf dem jeweiligen Frequenzkanal (K1-K6) erfolgt.

## Claims

1. Method for transmitting data between a terminal and a data collector (2) by radio, in which the data collector (2) is temporarily or permanently in receive mode, and in which
the terminal establishes communication with the data collector (2) from an idle phase in order to completely or partially transmit the data to the data collector (2) and/or to receive the data from the data collector (2), or
the data collector (2) establishes communication with the terminal in order to completely or partially transmit the data to the terminal and/or to receive the data from the terminal,
after setting up communication, the terminal transmits a message (15) to the data collector (2) and the data collector (2), after receiving the message (15), continues, interrupts and/or terminates the transmission of the data during communication on the basis of the content of the message (15), and
the data are transmitted in the form of data packets (11) each comprising a plurality of data blocks (12) and/or partial data blocks (13),
wherein the data are transmitted on a plurality of frequency channels (K1-K6) by using a frequency hopping method to transmit the data, in which the data blocks (12) and/or the partial data blocks (13) are transmitted on a plurality of frequency channels (K1-K6),
the message (15) comprises an item of start/stop information in order to inform the data collector (2) that it should continue, interrupt and/or terminate the transmission of the data, and
the terminal is a consumption meter (1) or a sensor.

2. Method according to Claim 1, **characterized in that** the terminal transmits a radio call from the idle phase at intervals of time and then changes to the receive mode for a predefined period for the purpose of setting up communication with the data collector (2) and/or the data collector (2) transmits a radio call for setting up communication with the terminal, wherein the terminal changes to the receive mode from the idle phase at intervals of time in order to receive the radio call.

3. Method according to one of the preceding claims, **characterized in that,** if the data collector (2) has received the radio call from the terminal, the data collector (2) transmits the data and/or a confirmation signal to transmit the data to the terminal.

4. Method according to one of the preceding claims, **characterized in that,** if the data collector (2) has received the radio call from the terminal, the data collector (2) aborts the transmission of the data and/or transmits a confirmation signal to abort the transmission of the data to the terminal.

5. Method according to one of the preceding claims, **characterized in that** the message (15) is transmitted at definable intervals of time.

6. Method according to one of the preceding claims, **characterized in that** the message (15) is respectively transmitted before and/or after one or more data blocks (12), partial data blocks (13) and/or pilot sequences (14) .

7. Method according to Claim 1, **characterized in that** the transmission quality of the frequency channels (K1-K6) is assessed.

8. Method according to Claim 7, **characterized in that** the transmission quality is assessed in such a manner that the receiving channel is checked for hidden nodes and the data transmission is interrupted or aborted if hidden nodes are determined via the receiving channel.

9. Method according to Claim 1, 7 or 8, **characterized in that** the message (15) is generated on the basis of the transmission quality of the respective frequency channel (K1-K6) .

10. Method according to one of the preceding claims, **characterized in that** the message (15) comprises an item of ACK/NACK information in order to inform the data collector (2) and/or the terminal of which data blocks (12) and/or partial data blocks (13) have been successfully transmitted.

11. Method according to one of the preceding claims, **characterized in that** the data collector (2) and/or the terminal repeatedly transmit(s) the unsuccessfully transmitted data until the latter have been successfully transmitted.

12. Method according to one of the preceding claims, **characterized in that** a synchronization sequence for synchronizing the time and/or frequency of the terminal is provided.

13. Method according to one of the preceding claims, **characterized in that** a pilot sequence (14) is assigned to the data blocks (12) and/or the partial data blocks (13) or a definable number of data blocks (12) and/or partial data blocks (13).

14. Method according to Claim 13, **characterized in that** the pilot sequence (s) (14) is/are part of the synchronization sequence.

15. Method according to one of the preceding claims, **characterized in that** the terminal transmits the message (15) on a first frequency channel and is then ready to receive on a second frequency channel in order to receive a possible transmission of the data by the data collector (2) on the second frequency channel.

16. Method according to one of the preceding claims, **characterized in that** the transmission of the data is a bidirectional data transmission.

17. Method according to one of the preceding claims, **characterized in that** the transmission of the data is a narrowband transmission.

18. Method according to Claim 17, **characterized in that** the receiving bandwidth of the respective receiver is less than 25 kHz, preferably less than 20 kHz, preferably less than 5 kHz, preferably less than 3 kHz, particularly preferably less than 2 kHz.

19. Method according to one of the preceding claims, **characterized in that** the consumption meter is a water, heat, gas or electricity meter.

20. Method according to one of the preceding claims, **characterized in that** a plurality of terminals and/or data collectors (2) are provided.

21. Method according to one of the preceding claims, **characterized in that** the data rate in the uplink is greater than the data rate in the downlink by at least a factor of 3, preferably a factor of 4, particularly preferably a factor of 5.

22. Method according to one of the preceding claims, **characterized in that** the data rate is varied inside a data block (12) and/or a partial data block (13).

23. Method according to one of the preceding claims, **characterized in that** at least one transmission pause is provided, in particular, between the transmissions, data blocks (12) and/or partial data blocks (13), wherein the duration of the transmission pause is such that it has at least the same length of the respective data block (12) and/or partial data block (13).

24. Method according to one of the preceding claims, **characterized in that,** after receiving the message (15), the data collector (2) slows down or accelerates the transmission of the data by increasing or reducing the duration of the transmission pauses and/or reducing or increasing the data rate.

25. Method according to one of the preceding claims, **characterized in that,** after the data transmission has been aborted and/or interrupted, a period until the renewed transmission and/or continuation of the transmission is defined.

26. Method according to one of the preceding claims, **characterized in that** the terminal transmits the message (15) in order to communicate that the communication between the data collector (2) and the terminal is poor, damaged or suboptimal.

27. Method according to one of the preceding claims, **characterized in that** the terminal transmits the message (15) in order to communicate the status of an energy supply (3a) of the terminal.

28. Method according to Claim 7, **characterized in that** the transmission quality is assessed on the basis of the signal power and/or the average signal power and/or the variation in the signal power on the respective frequency channel (K1-K6).

## Revendications

1. Procédé de transmission de données entre un terminal et un collecteur de données (2) par voie radioélectrique, avec lequel le collecteur de données (2) se trouve temporairement ou en permanence en réception et avec lequel
le terminal établit, à partir d'une phase de repos, une communication avec le collecteur de données (2) en vue d'envoyer les données entièrement ou partiellement au collecteur de données (2) et/ou les recevoir de la part du collecteur de données (2), ou
le collecteur de données (2) établit une communication avec le terminal en vue d'envoyer les données entièrement ou partiellement au terminal et/ou les recevoir de la part du terminal,
après l'établissement de la communication, le terminal envoie un message (15) au collecteur de données (2) et le collecteur de données (2), après la réception du message (15), poursuit, interrompt et/ou cesse la transmission des données pendant la communication en raison du contenu du message (15), et
la transmission des données s'effectue sous la forme de paquets de données (11) qui comportent respectivement plusieurs blocs de données (12) et/ou blocs de données partiels (13),
la transmission des données s'effectuant sur une pluralité de canaux de fréquence (K1-K6) en utilisant pour la transmission des données un procédé de saut de fréquence lors duquel les blocs de données (12) et/ou les blocs de données partiels (13) sont transmis sur plusieurs canaux de fréquence (K1-K6),
le message (15) comprenant une information de démarrage/arrêt afin de communiquer au collecteur de données (2) qu'il poursuit, interrompt et/ou cesse la transmission des données et
le terminal étant un appareil de mesure de consommation (1) ou un capteur.

2. Procédé selon la revendication 1, **caractérisé en ce que** le terminal émet un appel radioélectrique depuis la phase de repos à des intervalles de temps donnés et passe ensuite en réception pendant une durée prédéfinie en vue d'établir la communication avec le collecteur de données (2) et/ou le collecteur de données (2) émet un appel radioélectrique en vue d'établir la communication avec le terminal, le terminal passant en réception à des intervalles de temps donnés depuis la phase de repos afin de recevoir l'appel radioélectrique.

3. Procédé selon l'une des revendications précédentes, **caractérisé en ce que** dans le cas où il a reçu l'appel radioélectrique du terminal, le collecteur de données (2) envoie au terminal les données et/ou un signal de confirmation pour la transmission des données.

4. Procédé selon l'une des revendications précédentes, **caractérisé en ce que** dans le cas où il a reçu l'appel radioélectrique du terminal, le collecteur de données (2) arrête la transmission des données et/ou envoie au terminal un signal de confirmation pour l'arrêt de la transmission des données.

5. Procédé selon l'une des revendications précédentes, **caractérisé en ce que** le message (15) est envoyé dans des intervalles de temps pouvant être fixés.

6. Procédé selon l'une des revendications précédentes, **caractérisé en ce que** le message (15) est envoyé respectivement avant et/ou après un ou plusieurs blocs de données (12), blocs de données partiels (13) et/ou séquences pilotes (14).

7. Procédé selon la revendication 1, **caractérisé en ce qu'**une évaluation de la qualité de transmission des canaux de fréquence (K1-K6) est effectuée.

8. Procédé selon la revendication 7, **caractérisé en ce que** l'évaluation de la qualité de transmission est effectuée de telle sorte que le canal de réception est contrôlé pour y déceler la présence de nœuds cachés et la transmission de données est interrompue ou arrêtée lorsque la présence de nœuds cachés est identifiée sur le canal de réception.

9. Procédé selon la revendication 1, 7 ou 8, **caractérisé en ce que** le message (15) est généré à l'aide de la qualité de transmission du canal de fréquence (K1-K6) respectif.

10. Procédé selon l'une des revendications précédentes, **caractérisé en ce que** le message (15) comporte une information ACK/NACK afin de communiquer au collecteur de données (2) et/ou au terminal les blocs de données (12) et/ou blocs de données partiels (13) dont la transmission a réussi.

11. Procédé selon l'une des revendications précédentes, **caractérisé en ce que** le collecteur de données (2) et/ou le terminal répètent l'envoi des données dont la transmission n'a pas réussi jusqu'à ce que leur transmission réussit.

12. Procédé selon l'une des revendications précédentes, **caractérisé en ce qu'**une séquence de synchronisation est présente pour la synchronisation en temps et/ou en fréquence du terminal.

13. Procédé selon l'une des revendications précédentes, **caractérisé en ce qu'**une séquence pilote (14) est attribuée aux blocs de données (12) et/ou aux blocs de données partiels (13) ou à un nombre pouvant être fixé de blocs de données (12) et/ou de blocs de données partiels (13).

14. Procédé selon la revendication 13, **caractérisé en ce que** la séquence pilote ou les séquences pilotes (14) est ou sont une partie de la séquence de synchronisation.

15. Procédé selon l'une des revendications précédentes, **caractérisé en ce que** le terminal envoie le message (15) sur un premier canal de fréquences et est ensuite prêt pour la réception sur un deuxième canal de fréquences en vue de recevoir une transmission possible des données par le collecteur de données (2) sur le deuxième canal de fréquences.

16. Procédé selon l'une des revendications précédentes, **caractérisé en ce que** la transmission des données est une transmission bidirectionnelle.

17. Procédé selon l'une des revendications précédentes, **caractérisé en ce que** la transmission des données est une transmission à bande étroite.

18. Procédé selon la revendication 17, **caractérisé en ce que** la largeur de bande de réception du récepteur respectif est inférieure à 25 kHz, de préférence inférieure à 20 kHz, de préférence inférieure à 5 kHz, de préférence inférieure à 3 kHz, notamment de préférence inférieure à 2 kHz.

19. Procédé selon l'une des revendications précédentes, **caractérisé en ce que** l'appareil de mesure de consommation est un compteur d'eau, de volume d'eau, de gaz ou d'électricité.

20. Procédé selon l'une des revendications précédentes, **caractérisé en ce que** plusieurs terminaux et/ou collecteurs de données (2) sont présents.

21. Procédé selon l'une des revendications précédentes, **caractérisé en ce que** le débit de données en liaison montante est supérieur au débit de données en liaison descendante d'au moins un facteur 3, de préférence d'un facteur 4, notamment de préférence d'un facteur 5.

22. Procédé selon l'une des revendications précédentes, **caractérisé en ce que** le débit de données varie à l'intérieur d'un bloc de données (12) et/ou d'un bloc de données partiel (13).

23. Procédé selon l'une des revendications précédentes, **caractérisé en ce qu'**au moins une pause d'émission est présente, notamment entre les émissions de blocs de données (12) et/ou de blocs de données partiels (13), la durée de la pause d'émission étant dimensionnée de telle sorte que celle-ci présente au moins la même longueur que le bloc de données (12) et/ou le bloc de données partiel (13) respectif.

24. Procédé selon l'une des revendications précédentes, **caractérisé en ce que** le collecteur de données (2) ralentit ou accélère la transmission des données après la réception du message (15) en augmentant et/ou en réduisant la durée des pauses d'émission ou en réduisant ou en augmentant le débit de données.

25. Procédé selon l'une des revendications précédentes, **caractérisé en ce qu'**après l'arrêt et/ou l'interruption de la transmission de données, un intervalle de temps jusqu'à une nouvelle transmission et/ou la poursuite de la transmission est fixé.

26. Procédé selon l'une des revendications précédentes, **caractérisé en ce que** le terminal envoie le message (15) en vue de communiquer que la communication entre le collecteur de données (2) et le terminal est mauvaise, dégradée ou non optimale.

27. Procédé selon l'une des revendications précédentes, **caractérisé en ce que** le terminal envoie le message (15) pour communiquer l'état d'une alimentation en énergie (3a) du terminal.

28. Procédé selon la revendication 7, **caractérisé en ce que** l'évaluation de la qualité de transmission s'effectue à l'aide de la puissance du signal et/ou de la puissance moyenne du signal et/ou de la dispersion de la puissance du signal sur le canal de fréquences (K1-K6) respectif.
